# EUROPÄISCHE PATENTSCHRIFT

(11) **EP 1 013 496 B1**
(45) Veröffentlichungstag und Bekanntmachung des Hinweises auf die Patenterteilung: **01.03.2006**
(21) Anmeldenummer: 99124706.5
(22) Anmeldetag: 11.12.1999
(51) Int. Cl.: B60K 37/02

(54) **Anzeigeinstrument**
Display apparatus
Appareil indicateur

(30) Priorität: 23.12.1998 DE 19859919
(43) Veröffentlichungstag der Anmeldung: 28.06.2000
(73) Patentinhaber: SIEMENS AKTIENGESELLSCHAFT, 80333 München (DE)
(72) Erfinder: Ritter, Thomas, 63755 Alzenau (DE); Zeiss, Manfred, 65428 Rüsselsheim (DE); Ehmes, Harald, 63512 Hainburg (DE)

(56) Entgegenhaltungen:
- EP-A- 0 600 152
- DE-A- 4 227 579
- US-A- 4 939 934
- PATENT ABSTRACTS OF JAPAN vol. 1996, no. 02, 29. Februar 1996 (1996-02-29) & JP 07 286866 A (YAZAKI CORP), 31. Oktober 1995 (1995-10-31)

## Beschreibung

Die Erfindung betrifft ein Anzeigeinstrument, insbesondere für ein Kraftfahrzeug, mit einem Gehäuse mit einem eine Deckscheibe halternden Frontrahmen und einem zwischen Deckscheibe und Frontrahmen angeordneten Abstandselement, wobei die Deckscheibe im Bereich ihres Umfangs einen in etwa in Axialrichtung des Anzeigeinstruments zu dem Frontrahmen weisenden Steg aufweist. Weiterhin betrifft die Erfindung ein Verfahren zum Verbinden einer Deckscheibe mit einem Frontrahmen eines solchen Anzeigeinstrumentes.

Ein derartiges Anzeigeinstrument ist bekannt, wobei eine Deckscheibe in eine einen axialen Absatz bildende Radialausnehmung eines Instrumentengehäuses eingreift und dabei einen ebenfalls in der Radialausnehmung angeordneten Dichtring verspannt. Für die Montage muß die Deckscheibe verwölbt werden, und zum Einsetzen der Scheibe in das Gehäuse ist ein spezielles Montagewerkzeug erforderlich. Dieser Zusammenbau ist aufwendig und kompliziert, wodurch eine Automatisierung der Fertigung nahezu unmöglich ist. Darüber hinaus ist die Werkstoffwahl für die Deckscheibe weitestgehend festgelegt, da diese eine zumindest geringe Eigenelastizität aufweisen muß, und beim Einbau besteht die Gefahr einer Beschädigung der Scheibe.

Darüber hinaus sind Anzeigeinstrumente bekannt, in denen die Deckgläser jeweils mit dem Frontrahmen verschweißt sind. Dabei handelt es sich um ein teures Fertigungsverfahren, das zudem nur für wenige Werkstoffpaarungen anwendbar ist. Ferner ist es bekannt, Deckscheibe und Frontrahmen zu verklipsen. Diese Klipsverbindungen sind spielbehaftet, wodurch es bei Verwindungen des Anzeigeinstrumentes, wie sie insbesondere in Kraftfahrzeugen durch fortdauernde schwingende Anregung regelmäßig auftreten, zu einer ständigen Ge-räuschentwicklung kommt. Darüber hinaus dringt bei diesen Verbindungen Staub in das Anzeigeinstrument ein, wodurch sowohl die Ablesbarkeit des Instruments verschlechtert werden kann als auch seine Betriebssicherheit verringert wird.

Ein Anzeigeinstrument der eingangs genannten Art ist aus der DE-A-42 27 579 bekannt. Das Deckglas ist durch Schweißen fest mit dem Frontrahmen verbunden. Dabei ist das Abstandselement ein unelastischer Keder, der in einer Nut zwischen Deckscheibe und Frontrahmen gehalten ist und an der Wandung des Schachts anliegt, um Knarr- und Quietschgeräusche aufgrund von Reibung des Frontrahmens auf der Wandung des Einbauschachtes, in das das Anzeigeinstrument eingesetzt ist, zu vermeiden.

Der Erfindung liegt daher die Aufgabe zugrunde, ein Anzeigeinstrument der eingangs genannten Art zu schaffen, das zum einen ein Eindringen von Verschmutzungen in das Instrument zumindest weitgehend ausschließt und zum anderen eine dauerhafte und spielfreie Verbindung zwischen Deckscheibe und Frontrahmen gewährleistet. Darüber hinaus soll das Anzeigeinstrument besonders einfach und kostengünstig in großer Stückzahl herstellbar sein. Weiterhin soll ein Verfahren zum vereinfachten Verbinden einer Deckscheibe mit einem Frontrahmen eines solchen Anzeigeinstrumentes entwickelt werden.

Die erstgenannte Aufgabe wird erfindungsgemäß dadurch gelöst, daß das Abstandselement elastisch ausgebildet und in einer im Bereich des Umfangs des Frontrahmens angeordneten und der Deckscheibe zugewandten Axialausnehmung nutförmigen Querschnitts plaziert ist, wobei das Abstandselement an dem Nutgrund anliegt und zwischen Frontrahmen und dem in die Axialausnehmung eingreifenden Steg eingeklemmt ist. Aufgrund einer solchen Ausbildung ist ein sicheres Anliegen in exakter Lage der Deckscheibe an den Frontrahmen garantiert, ohne daß bei Relativbewegung der Bauteile zueinander, z. B. angeregt durch äußere Schwingungen, ein Gleiten der Elemente aufeinander erfolgt, wodurch eine unerwünschte Geräuschentwicklung ausgeschlossen wird. Darüber hinaus können mit dem erfindungsgemäßen Anzeigeinstrument in einfacher Weise Fertigungstoleranzen, die insbesondere bei großflächigen Anzeigeinstrumenten ein erhebliches Maß erreichen können, in einfacher Weise zwischen Deckscheibe und Frontrahmen ausgeglichen werden. Zudem ermöglicht das Abstandselement zusammen mit der Axialausnehmung eine optische Kaschierung des Verbindungsbereichs zwischen Deckscheibe und Frontrahmen; eine zusätzliche Blende hierfür kann entfallen, der komplette Umfang des Anzeigeinstrumentes kann für einen Betrachter den Einbauraum des Anzeigeinstrumentes verringernd unmittelbar sichtbar sein. Durch die Eingreifbarkeit der Deckscheibe in die Axialausnehmung ist das erfindungsgemäße Anzeigeinstrument besonders einfach zu montieren, da die Deckscheibe von vorne her ohne Verkanten oder Verwölben unmittelbar mit dem Frontrahmen verbunden werden kann.

Der Nutgrund bildet in einfacher Weise einen axialen Anschlag beim Fügen von Deckscheibe und Frontrahmen.

Sowohl der Fügevorgang als auch das Einbringen des Abstandselements in die Axialausnehmung wird vorteilhaft erheblich vereinfacht, wenn die Nut zur Deckscheibe hin divergierende Seitenflanken besitzt.

Dadurch, daß das Abstandselement zwischen Frontrahmen und Deckscheibe eingeklemmt ist, wird infolge der Klemmkraft über die gesamte Lebensdauer des Anzeigeinstruments eine dichte Verbindung und sichere Entkopplung von Frontrahmen und Deckscheibe gewährleistet.

Der Steg kann abschnittsweise angeordnet sein. Von besonderem Vorteil für eine insbesondere dichte Verbindung von Deckscheibe und Frontrahmen ist es jedoch, wenn der Steg kontinuierlich im Bereich des Umfangs der Deckscheibe um diese umläuft. Der Steg könnte auch als Fügehilfe dienen.

Es ist vorstellbar, daß die Axialausnehmung lediglich abschnittsweise im Bereich des Umfangs des Frontrahmens angeordnet ist. Eine besonders dichte und homogene Verbindung zwischen Deckscheibe und Frontrahmen wird jedoch ermöglicht, wenn gemäß einer vorteilhaften Weiterbildung der Erfindung die Axialausnehmung im Bereich des Umfangs des Frontrahmens um diesen kontinuierlich umläuft. Damit wird gleichzeitig auch der Fügevorgang von Deckscheibe und Frontrahmen vereinfacht.

Eine besonders sichere Fixierung des Abstandselements an den Frontrahmen ist dann zu erzielen, wenn gemäß einer anderen vorteilhaften Weiterbildung der Erfindung der Nutgrund der Axialausnehmung eine von der Deckscheibe weg weisende Einbuchtung aufweist, in der das Abstandselement halterbar ist.

Man könnte sich beispielsweise vorstellen, daß das Abstandselement ein Gummielement ist und in die Axialausnehmung des Frontrahmens eingelegt ist. Hingegen läßt sich das Abstandselement in besonders einfacher Weise an dem Frontrahmen anordnen, wenn es vorteilhaft aus einem aushärtenden Werkstoff besteht. Zusätzlich kann dabei während des Aushärtens eine Anpassung an den in die Axialausnehmung eingreifenden Teil der Deckscheibe erfolgen.

Gemäß einer anderen vorteilhaften Weiterbildung der Erfindung wird eine besonders einfache und sichere Verbindung zwischen Deckscheibe und Frontrahmen erzielt, wenn das Abstandselement einen Klebstoff aufweist. Somit erfüllt das Abstandselement gleichzeitig die Funktionen des Abdichtens des Instruments, der Verbindung der Deckscheibe mit dem Frontrahmen und der mechanischen Entkopplung und Dämpfung dieser Bauteile.

Für das Abstandselement eignen sich grundsätzlich die verschiedenartigsten Werkstoffe, die Verarbeitung und den Einbau des Abstandselementes vorteilhaft vereinfachend z. B. thermoplastische Elastomere. Besonders vorteilhaft ist es jedoch, wenn das Abstandselement vorzugsweise aus einem Polyesterschaum besteht. Dieser Werkstoff ist bei üblichen Verarbeitungstemperaturen schon unter geringem Druck leicht fließbar und härtet ohne flüchtige Nebenprodukte aus. Außerdem tritt beim Aushärten nahezu keine Schwindung auf, so daß das Abstandselement maßgetreu und nicht spannungsrißanfällig ist.

Es ist vorstellbar, den Frontrahmen mit der Deckscheibe zu verschrauben oder lediglich mittels einer Klebung zu verbinden. Das Anzeigeinstrument ist hingegen besonders dauerhaltbar auch unter schwingender Beanspruchung wie sie in Kraftfahrzeugen auftritt, und es ist zudem sehr einfach montierbar, wenn vorteilhaft der Frontrahmen und die Deckscheibe mittels einer Klipsvorrichtung miteinander verbunden sind. Dabei ist eine besonders sichere Verbindung gewährleistet, wenn im Bereich des Umfangs der Deckscheibe mit Abstand zueinander mindestens zwei Klipse angeordnet sind, die in korrespondierende, am Frontrahmen angeordnete Klipslaschen eingreifen. Vorteilhaft läßt sich ein besonders hoher Druck auf das Abstandselement ausüben, wenn die Klipsvorrichtung im Bereich des Abstandselements angeordnet ist. Um dabei die volle Funktionalität des Abstandselements aufrechtzuerhalten, ist es von besonderem Vorteil, wenn gemäß einer anderen Weiterbildung der Erfindung das Abstandselement Einbuchtungen oder Ausnehmungen aufweist, durch die die Klipse hindurchgreifen.

Besonders vorteilhaft ist es, wenn der Steg an dem Abstandselement anliegt und somit gleichzeitig die Verbindung zwischen Deckscheibe und Frontrahmen unterstützt und eine Klemmkraft auf das Abstandselement ausüben kann. Die Übergangs- und damit Dämpfungs- und Dichtfläche zwischen Deckscheibe und Frontrahmen ist besonders groß, wenn gemäß einer anderen vorteilhaften Weiterbildung der Erfindung der Steg in das Abstandselement eingreift.

Aufgrund des mit der Erfindung ermöglichten einfachen Zusammenbaues von Deckscheibe und Frontrahmen durch axiales Fügen sowie der vollständigen mechanischen Entkopplung dieser beiden Bauteile, wodurch deren Verbindung in einfacher Weise spannungsfrei gehalten werden kann, ist für die Deckscheibe und den Frontrahmen eine sehr breite Auswahl an Werkstoffen verwendbar. Aufgrund guter optischer Eigenschaften, die sich in einer hohen Transparenz und einer ausgezeichneten Oberflächengüte äußern, ist es jedoch von besonderem Vorteil, wenn die Deckscheibe aus einem Polymethylmethacrylat (PMMA) aufweisenden Werkstoff besteht. Damit wird ausgeschlossen, daß aufgrund schlechter optischer Qualität der Deckscheibe und somit mangelhafter Ablesbarkeit des Anzeigeinstruments möglicherweise eine Gefährdung der Verkehrssicherheit stattfindet. Der Frontrahmen ist besonders einfach und kostengünstig herstellbar, wenn er vorzugsweise aus einem Polypropylen (PP) aufweisenden Werkstoff besteht.

Die zweitgenannte Aufgabe, nämlich die Schaffung eines Verfahrens zum vereinfachten Verbinden einer Deckscheibe mit einem Frontrahmen eines erfindungsgemäßen Anzeigeinstrumentes, wird erfindungsgemäß dadurch gelöst, daß in einem ersten Schritt das Abstandselement in die Axialausnehmung des Frontrahmens eingebracht wird und daß in einem zweiten Schritt die Deckscheibe in die Axialausnehmung gegen das Abstandselement eingedrückt wird.

Dieses Verfahren bedarf vorteilhaft keiner manuellen Geschicklichkeit; es ermöglicht in einfacher Weise einen hohen Automatisierungsgrad der Herstellung, wobei gleichzeitig sehr große Stückzahlen pro Zeiteinheit produziert werden können. Durch das Einbringen des Abstandselements in die Axialausnehmung ist das Abstandselement in sehr einfacher Weise lagegenau zu positionieren. Das Eindrücken der Deckscheibe in die Axialausnehmung stellt einen einfachen einachsigen Fügevorgang dar.

Vorzugsweise besteht das Abstandselement aus einem beim Einbringen in die Axialausnehmung fließfähigen Werkstoff und wird in die Axialausnehmung eingespritzt. In besonders einfacher Weise kann somit mit einer leicht gegenüber der Axialausnehmung zu positionierenden Spritzdüse ohne einen zusätzlichen Fügevorgang das Abstandselement in die Axialausnehmung eingebracht werden. Es wäre vorstellbar, daß das Abstandselement nach dem Einsetzen der Deckscheibe in einem zähen Zustand verbleibt. Eine besonders feste und dauerhafte Verbindung zwischen Deckscheibe und Frontrahmen ergibt sich jedoch, wenn das Abstandselement vorteilhaft nach dem Zusammenfügen von Frontrahmen und Deckscheibe aushärtet.

Beispielsweise eine Klebeverbindung ist für einen Halt der Deckscheibe an dem Frontrahmen bereits hinreichend. Gemäß einer anderen Weiterbildung der Erfindung ist es jedoch besonders vorteilhaft, wenn der Frontrahmen und die Deckscheibe miteinander verklipst werden. Durch die Klipsverbindung kann zusätzlich dauerhaft eine Klemmkraft auf das Abstandselement ausgeübt werden, so daß es es unter Vorspannung Frontrahmen und Deckscheibe gegenander positionieren kann.

Die Erfindung kann sehr unterschiedlich ausgeführt werden. Sie wird im folgenden anhand von in den beigefügten Zeichnungen dargestellten Ausführungsbeispielen näher erläutert. Es zeigt:
- Fig. 1: ein Anzeigeinstrument in einer Explosionsdarstellung,
- Fig. 2, 3: einen Ausschnitt eines Frontrahmens und einer Deckscheibe in einer ersten Ausführungsform und
- Fig. 4, 5: einen Ausschnitt eines Frontrahmens und einer Deckscheibe in einer zweiten Ausführungsform.

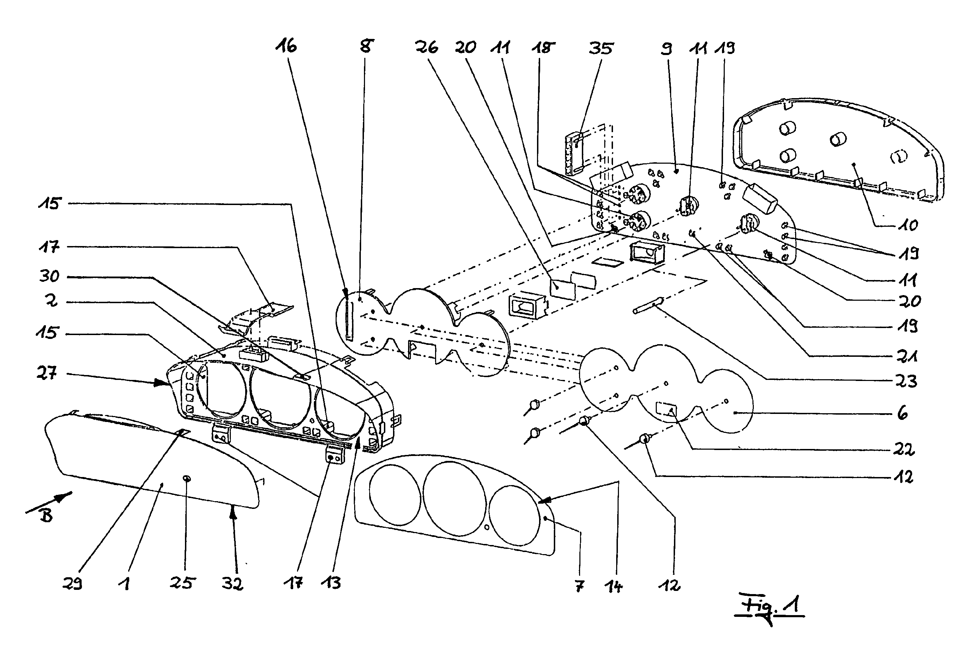

In Figur 1 ist ein erfindungsgmäßes Anzeigeinstrument mit einem Frontrahmen 2, einer Leiterplatte 9 und einer Rückwand 10 vor der Montage dargestellt. An der Vorderseite des Frontrahmens 2 ist eine Deckscheibe 1 einklipsbar. Auf der Leiterplatte 9 sind mehrere Meßwerke 11, Kontrolleuchten 19 und Glühlampen 20 angeordnet. Die Meßwerke 11 dienen zum Antrieb von im montierten Zustand des Anzeigeinstrumentes über ein Zifferblatt 6 schwenkbaren Zeigern 12. Das Zifferblatt 6 ist aus einem durchscheinenden Material gefertigt und zur Befestigung auf einer von den Glühlampen 20 beleuchtbaren Lichtleiterplatte 8 vorgesehen. Die Meßwerke 11 bilden mit den Zeigern 12 und dem Zifferblatt 6 jeweils eine Anzeigeeinheit, die zusammengefaßt mit weiteren Anzeigeeinheiten das auch als Kombinationsinstrument bezeichnete Anzeigeinstrument bilden. Derartige Kombinationsinstrumente werden bevorzugt in Kraftfahrzeugen eingesetzt und sind dort üblicherweise in die Instrumententafel eingebaut.

Der Frontrahmen 2 hat mehrere Ausnehmungen 13 für die Anzeigeeinheiten und ist einteilig mit Lichtschächten 15 für die Kontrolleuchten 19 ausgebildet. Die Vorderseite des Frontrahmens 2 dient der Befestigung einer Blende 7. Diese Blende 7 hat mit den Ausnehmungen 13 des Frontrahmens 2 korrespondierende Ausnehmungen 14 für die Anzeigeeinheiten und verdeckt im montierten Zustand die Lichtschächte 15. Weiterhin weist der Frontrahmen 2 mehrere Halteteile 17 zur Befestigung des Kombinationsinstrumentes in der Instrumententafel des Kraftfahrzeuges auf. Eine elektrische Verbindung des Kombinationsinstrumentes mit der Fahrzeugelektronik erfolgt mittels auf der Leiterplatte 9 angeordneter Steckkontakte.

Das Zifferblatt 6 und die Lichtleiterplatte 8 besitzen jeweils eine Ausnehmung 22 für einen auf der Leiterplatte 9 anzuordnenden Flachbildschirm 26. Auf der Leiterplatte 9 ist eine Glühlampe 21 zur Beleuchtung des Flachbildschirmes 26 vorgesehen. Die Lichtleiterplatte 8 besitzt eine weitere Ausnehmung 16, durch welche sich zusätzliche Informationen von einer Reihe auf der Leiterplatte 9 angeordneter Leuchtdioden 18 auf dem Zifferblatt 6 darstellen lassen. Hierfür erforderliche Lichtschächte 35 sind zur Montage auf der Leiterplatte 9 vorgeshen. Eine in dem Frontrahmen 2 und der Deckscheibe 1 vorhandene Ausnehmung 25 dient der Durchführung eines Bedienelementes 23 zum Rückstellen eines Tageskilometerzählers.

Ein Zusammenbau der vorbeschriebenen Einzelteile des Anzeigeinstrumentes erfolgt im wesentlichen in Axialrichtung B des Anzeigeinstrumentes. Zur Verbindung der Deckscheibe 1 mit dem Frontrahmen 2 weist die Deckscheibe 1 im Bereich ihres Umfangs 32 Klipse 29 und der Frontrahmen 2 im Bereich seines Umfangs 27 mit den Klipsen 29 korrespondierende Klipslaschen 30 auf. Die Klipse 29 sind in die Klipslaschen 30 eingreifbar.

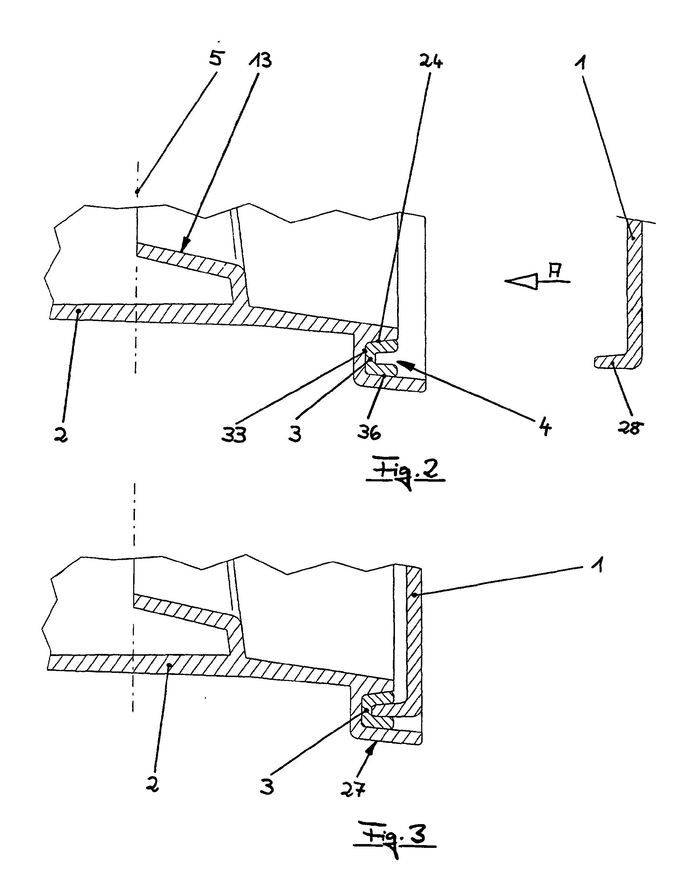

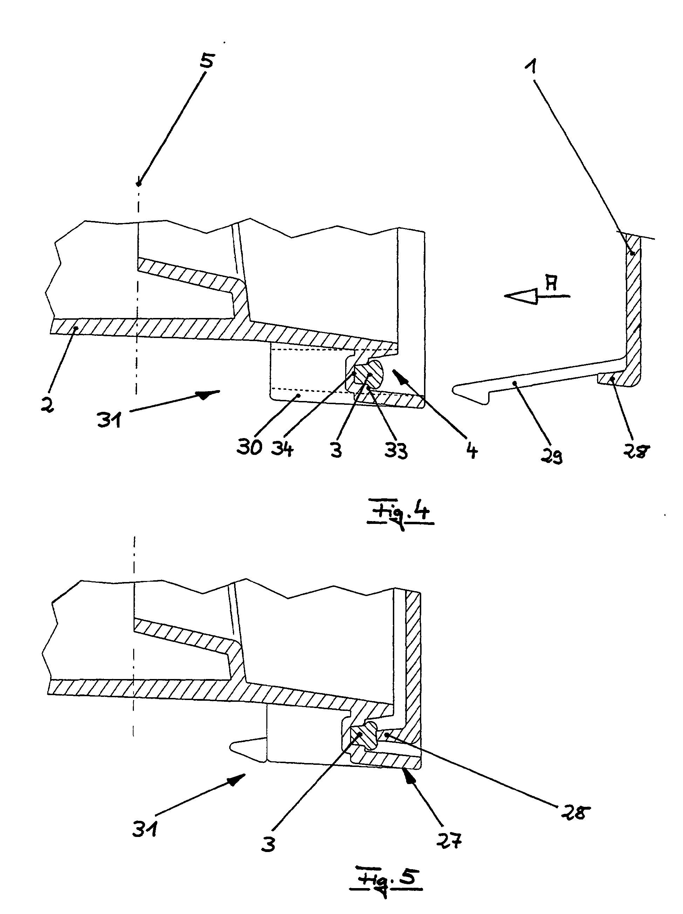

Zur Verdeutlichung der Verbindung von Frontrahmen 2 und Deckscheibe 1 ist in Figur 2, 3 ein Ausschnitt des Randbereichs eines Frontrahmens 2 und einer Deckscheibe 1 in einer alternativen Ausführungsform vergrößert dargestellt, wobei zur Verdeutlichung der Lage des Ausschnitts eine Ebene 5, in der ein Zifferblatt anzuordnen ist, und eine Ausnehmung 13 des Frontrahmens 2 für eine Anzeigeeinheit eingezeichnet ist. Figur 2 zeigt die beiden Bauteile, bevor sie in eingezeichneter Fügerichtung A, die in etwa der Axialrichtung B des Anzeigeinstruments (Fig. 1) entspricht, zusammengesetzt werden. Den zusammengebauten Zustand zeigt Figur 3. Es ist zu erkennen, daß im Bereich des Umfangs 27 des Frontrahmens 2 eine der Deckscheibe 1 zugewandte Axialausnehmung 4 angeordnet ist. In diese, im Bereich des Umfangs 27 des Frontrahmens 2 um diesen kontinuierlich umlaufende Axialausnehmung 4 ist ein einen in etwa U-förmigen Querschnitt aufweisendes elastisches Abstandselement 3 eingelegt. Die Axialausnehmung 4 ist dabei nutförmig ausgebildet und das Abstandselement 3 liegt unmittelbar an ihrem Nutgrund 33 sowie den Nutflanken 24, 36 an. Ein am Umfang der Deckscheibe 1 umlaufender Steg 28 ist in das Abstandselement 3 eingreifbar.

Einen gleichen Ausschnitt eines Umfangsbereichs eines Frontrahmens 2 und einer Deckscheibe 1 zeigt Figur 4, 5 in einer Figur 1 entsprechenden Ausführungsform. Zur Verdeutlichung der Lage des Ausschnitts ist auch hier eine Zifferblattebene 5 eingezeichnet. Im Bereich des Umfangs 27 des Frontrahmens 2 ist eine kontinuierlich umlaufende, nutförmige Axialausnehmung 4 angeordnet. In die Axialausnehmung 4, deren Nutgrund 33 eine von der Deckscheibe 1 weg weisende Einbuchtung 34 aufweist, ist als Abstandselement 3 ein Polyesterschaum eingespritzt, der nach dem Spritzvorgang aushärtet und in einem elastischen Zustand verbleibt. Am Umfang 27 des Frontrahmens 2 angeordnete Klipslaschen 30 nehmen am Umfang der Deckscheibe 1 korrespondierend angebrachte Klipse 29 auf. Auf das ausgehärtete Abstandselement 3 drückt im zusammengebauten Zustand ein Steg 28 der Deckscheibe 1, der das Abstandselement 3 gegen den Nutgrund 33 und die Einbuchtung 34 der Axialausnehmung 4 nach Verrasten in Fügerichtung A der aus Klips 29 und Klipslasche 30 bestehenden Klipsvorrichtung 31 verspannt.

## Patentansprüche

1. Anzeigeinstrument, insbesondere für ein Kraftfahrzeug, mit einem Gehäuse mit einem eine Deckscheibe (1) halternden Frontrahmen (2) und einem zwischen Deckscheibe (1) und Frontrahmen (2) angeordneten Abstandselement (3), wobei die Deckscheibe (1) im Bereich ihres Umfangs einen in etwa in Axialrichtung des Anzeigeinstruments zu dem Frontrahmen weisenden Steg aufweist, **dadurch gekennzeichnet, daß** das Abstandselement (3) elastisch ausgebildet und in einer im Bereich des Umfangs (27) des Frontrahmens (2) angeordneten und der Deckscheibe (1) zugewandten Axialausnehmung (4) nutförmigen Querschnitts plaziert ist, wobei das Abstandselement an dem Nutgrund anliegt und zwischen Frontrahmen und dem in die Axialausnehmung (4) eingreifenden Steg (28) eingeklemmt ist.

2. Anzeigeinstrument nach Anspruch 1, **dadurch gekennzeichnet, daß** die Axialausnehmung (4) im Bereich des Umfangs (27) des Frontrahmens (2) um diesen kontinuierlich umläuft.

3. Anzeigeinstrument nach einem der vorhergehenden Ansprüche, **dadurch gekennzeichnet, daß** der Nutgrund (33) der Axialausnehmung (4) eine von der Deckscheibe (1) weg weisende Einbuchtung (34) aufweist.

4. Anzeigeinstrument nach einem der vorhergehenden Ansprüche, **dadurch gekennzeichnet, daß** das Abstandselement (3) aus einem aushärtenden Werkstoff besteht.

5. Anzeigeinstrument nach einem der vorhergehenden Ansprüche, **dadurch gekennzeichnet, daß** das Abstandselement (3) einen Klebstoff aufweist.

6. Anzeigeinstrument nach einem der vorhergehenden Ansprüche, **dadurch gekennzeichnet, daß** das Abstandselement (3) aus einem Polyesterschaum besteht.

7. Anzeigeinstrument nach einem der vorhergehenden Ansprüche, **dadurch gekennzeichnet, daß** der Frontrahmen (2) und die Deckscheibe (3) mittels einer Klipsvorrichtung (31) miteinander verbunden ist sind.

8. Anzeigeinstrument nach Anspruch 7, **dadurch gekennzeichnet, daß** im Bereich des Umfangs (32) der Deckscheibe (1) mit Abstand zueinander mindestens zwei Klipse (29) angeordnet sind, die in korrespondierende, am Frontrahmen (2) angeordnete Klipslaschen (30) eingreifen.

9. Anzeigeinstrument nach Anspruch 8, **dadurch gekennzeichnet, daß** das Abstandselement (3) Einbuchtungen oder Ausnehmungen aufweist, durch die die Klipse (29) hindurchgreifen.

10. Anzeigeinstrument nach einem der vorhergehenden Ansprüche, **dadurch gekennzeichnet, daß** der Steg (28) an dem Abstandselement (3) anliegt.

11. Anzeigeinstrument nach Anspruch 10, **dadurch gekennzeichnet, daß** der Steg (28) in das Abstandselement (3) eingreift.

12. Anzeigeinstrument nach einem der vorhergehenden Ansprüche, **dadurch gekennzeichnet, daß** der Frontrahmen (2) aus einem Polypropylen (PP) und die Deckscheibe (1) aus einem Polymethylmethacrylat (PMMA) aufweisenden Werkstoff bestehen.

13. Verfahren zum Verbinden einer Deckscheibe (1) mit einem Frontrahmen (2) eines Anzeigeinstrumentes nach einem der vorhergehenden Ansprüche, **dadurch gekennzeichnet, daß** in einem ersten Schritt das Abstandselement (3) in die Axialausnehmung (4) des Frontrahmens (2) eingebracht wird und daß in einem zweiten Schritt die Deckscheibe (1) in die Axialausnehmung (4) in das Abstandselement (3) eingedrückt wird.

14. Verfahren nach Anspruch 13, **dadurch gekennzeichnet, daß** das Abstandselement (3) aus einem beim Einbringen in die Axialausnehmung (4) fließfähigen Werkstoff besteht und in die Axialausnehmung (4) eingespritzt wird.

15. Verfahren nach einem der Ansprüche 13 oder 14, **dadurch gekennzeichnet, daß** das Abstandselement (3) nach dem Zusammenfügen von Frontrahmen (2) und Deckscheibe (1) aushärtet.

16. Verfahren nach einem der Ansprüche 13 bis 15, **dadurch gekennzeichnet, daß** der Frontrahmen (2) und die Deckscheibe (1) miteinander verklipst werden.

## Claims

1. Indicating instrument, in particular for a motor vehicle, having a housing with a front frame (2) holding a cover pane (1), and a spacing element (3) arranged between the cover pane (1) and front frame (2) in the region of its circumference the cover pane (1) having a web pointing to the front frame approximately in the axial direction of the indicating instrument, **characterized in that** the spacing element (3) is elastically formed and is placed in an axial cutout (4) of groove-shaped cross section which is arranged in the region of the circumference (27) of the front frame (2) and faces the cover pane (1), the spacing element bearing against the groove base and being clamped between the front frame and the web (28) which engages in the axial cutout (4).

2. Indicating instrument according to Claim 1, **characterized in that** the axial cutout (4) in the region of the circumference (27) of the front frame (2) runs continuously around the latter.

3. Indicating instrument according to one of the preceding claims, **characterized in that** the groove base (33) of the axial cutout (4) has an indentation (34) pointing away from the cover pane (1).

4. Indicating instrument according to one of the preceding claims, **characterized in that** the spacing element (3) consists of a hard-setting material.

5. Indicating instrument according to one of the preceding claims, **characterized in that** the spacing element (3) has an adhesive.

6. Indicating instrument according to one of the preceding claims, **characterized in that** the spacing element (3) consists of a polyester foam.

7. Indicating instrument according to one of the preceding claims, **characterized in that** the front frame (2) and the cover pane (3) are interconnected by means of a clip device (31).

8. Indicating device according to Claim 7, **characterized in that** arranged at a mutual spacing in the region of the circumference (32) of the cover pane (1) are at least two clips (29) which engage in corresponding clip lugs (30) arranged on the front frame (2).

9. Indicating instrument according to Claim 8, **characterized in that** the spacing element (3) has indentations or cutouts through which the clips (29) engage.

10. Indicating instrument according to one of the preceding claims, **characterized in that** the web (28) is put against the spacing element (3).

11. Indicating instrument according to Claim 10, **characterized in that** the web (28) engages in the spacing element (3).

12. Indicating instrument according to one of the preceding claims, **characterized in that** the front frame (2) consists of a material having polypropylene (PP), and the cover pane (1) consists of a material having polymethyl methacrylate (PMMA).

13. Method for connecting a cover pane (1) to a front frame (2) of an indicating instrument according to one of the preceding claims, **characterized in that** in a first step the spacing element (3) is inserted into the axial cutout (4) in the front frame (2), and in a second step the cover pane (1) is pressed into the axial cutout (4) in the spacing element (3).

14. Method according to Claim 13, **characterized in that** the spacing element (3) consists of a material which flows when being inserted into the axial cutout (4), and is injected into the axial cutout (4).

15. Method according to one of Claims 13 or 14, **characterized in that** the spacing element (3) sets hard after the assembly of the front frame (2) and cover pane (1).

16. Method according to one of Claims 13 to 15, **characterized in that** the front frame (2) and the cover pane (1) are clipped to one another.

## Revendications

1. Appareil indicateur destiné, notamment, à un véhicule automobile, ayant un boîtier avec un cadre avant (2) maintenant une vitre de fermeture (1) et un élément d'écartement (3) disposé entre la vitre de fermeture (1) et le cadre avant (2), où la vitre de fermeture (1) a, sur sa périphérie, une moulure dirigée vers le cadre avant approximativement dans le sens axial de l'appareil indicateur, **caractérisé par le fait que** l'élément d'écartement (3) est élastique et est placé dans un évidement axial (4), dont la section à la forme d'une rainure, ménagé dans la zone périphérique (27) du cadre avant (2) et tourné vers la vitre de fermeture (1), l'élément d'écartement étant appliqué sur le fond de la rainure et étant coincé entre le cadre avant et la moulure (28) qui s'engage dans l'évidement axial (4).

2. Appareil indicateur selon la revendication 1 **caractérisé par le fait que** l'évidement axial (4) s'étend d'une façon continue dans la zone périphérique (27) du cadre avant (2) et l'entoure.

3. Appareil indicateur selon l'une des revendications précédentes **caractérisé par le fait que** le fond (33) de la rainure de l'évidement axial (4) comporte un enfoncement (34) dans le sens opposé à la vitre de fermeture (1).

4. Appareil indicateur selon l'une des revendications précédentes **caractérisé par le fait que** l'élément d'écartement (3) est composé d'une matière première durcissant ultérieurement.

5. Appareil indicateur selon l'une des revendications précédentes **caractérisé par le fait que** l'élément d'écartement (3) comporte une colle.

6. Appareil indicateur selon l'une des revendications précédentes **caractérisé par le fait que** l'élément d'écartement (3) se compose d'une mousse de polyester.

7. Appareil indicateur selon l'une des revendications précédentes **caractérisé par le fait que** le cadre avant (2) et la vitre de fermeture (1) sont liés l'un à l'autre au moyen d'un système à agrafes (31).

8. Appareil indicateur selon la revendication 7 **caractérisé par le fait que**, dans la zone périphérique (32) de la vitre de fermeture (1), sont disposées, à une certaine distance l'une de l'autre, au moins deux agrafes (29) qui s'engagent dans des languettes (30) correspondantes disposées sur le cadre avant (2).

9. Appareil indicateur selon la revendication 8 **caractérisé par le fait que** l'élément d'écartement (3) comporte des enfoncements ou des évidements à travers lesquels s'engagent les agrafes (29).

10. Appareil indicateur selon l'une des revendications précédentes **caractérisé par le fait que** la moulure (28) s'applique sur l'élément d'écartement (3).

11. Appareil indicateur selon la revendication 10 **caractérisé par le fait que** la moulure (28) s'engage dans l'élément d'écartement (3).

12. Appareil indicateur selon l'une des revendications précédentes **caractérisé par le fait que** le cadre avant (2) se compose de polypropylène (PP) et la vitre de fermeture (1) d'une matière première renfermant du polyméthacrylate de méthyle (PMMA) .

13. Procédé permettant d'assembler une vitre de fermeture (1) avec un cadre avant (2) d'un appareil indicateur conforme à l'une des revendications précédentes, **caractérisé par le fait que**, au cours d'une première étape, l'élément d'écartement (3) est engagé dans l'évidement axial (4) du cadre avant (2) et que, au cours d'une deuxième étape, la vitre de fermeture (1) est enfoncée dans l'évidement axial (4) de l'élément d'écartement (3).

14. Procédé selon la revendication 13 **caractérisé par le fait que** l'élément d'écartement (3) est composé d'une matière première ayant une bonne fluidité lorsqu'il est mis en place dans l'évidement axial (4) et qu'il est injecté dans l'évidement axial (4).

15. Procédé selon l'une des revendications 13 ou 14 **caractérisé par le fait que** l'élément d'écartement (3) durcit après l'assemblage du cadre avant (2) et de la vitre de fermeture (1).

16. Procédé selon l'une des revendications 13 à 15 **caractérisé par le fait que** le cadre avant (2) et la vitre avant (1) sont agrafés l'un à l'autre.
